# DEMANDE DE BREVET EUROPEEN

(11) **EP 2 255 675 A2**
(43) Date de publication de la demande: **01.12.2010**
(21) Numéro de dépôt: 10164216.3
(22) Date de dépôt: 28.05.2010
(51) Int. Cl.: A23K 1/00, A23K 1/18

(54) **Procédé d'obtention de foie gras comprenant l'administration de bactéries probiotiques**

(30) Priorité: 29.05.2009 FR 0953571
(71) Demandeur: Université de la Méditerranée, Jardin du Pharo 58 Bd C. Livon 13007 Marseille (FR)
(72) Inventeur: Raoult, Didier, 13008 Marseille (FR); Angelakis, Emmanouil, 13008 Marseille (FR)
(74) Mandataire: Cabinet Plasseraud

(57) **Abrégé**

L'invention concerne un nouveau procédé d'obtention de foie gras dans lequel l'animal utilisé subit une injection intragastrique de bactéries probiotiques à l'âge d'environ 2 à 14 jours permettant l'augmentation de la taille du foie de l'animal.

## Description

L'invention concerne un nouveau procédé d'obtention de foie gras dans lequel l'animal utilisé subit une injection intragastrique de bactéries probiotiques à l'âge d'environ 2 à 14 jours permettant l'augmentation de la taille du foie de l'animal.

La stéatose hépatique du canard et de l'oie permet l'obtention du foie gras, également appelé foie stéatosé. L'obtention d'un foie stéatosé est due à l'accumulation de triglycérides dans le foie des animaux, par exemple lors d'une étape de suralimentation forcée. La technique de suralimentation forcée tire partie du mécanisme naturel de ces volailles qui, avant leur migration pousse les oiseaux à accumuler le plus de graisse possible, constituant ainsi une réserve énergétique.

Pour rendre la production de foie gras économiquement intéressante, la suralimentation forcée est effectuée à l'aide de gaveuses mécaniques qui sont munies d'un mécanisme électrique. Cette technique présente des limitations importantes puisqu'elle aboutit à un taux de décès prématurés des volailles ce qui conduit à une perte économique pour l'éleveur, et donc à un rendement final moindre.

L'art antérieur a proposé d'autres solutions pour améliorer le rendement en poids de foie stéatosé chez les volailles.

Parmi ces solutions, il a été envisagé d'obtenir des animaux génétiquement modifiés pour permettre une augmentation de leur taille, et plus particulièrement de la taille de leur foie. Mais cela conduit à des problèmes d'ordres éthiques ainsi qu'à des réticences du consommateur, en particulier du consommateur français, à consommer des OGM.

L'art antérieur a également proposé des techniques consistant à augmenter la quantité et la qualité nutritive des produits utilisés pour la suralimentation forcée des animaux. Cependant, ces techniques ont entrainé soit la mort prématurée des animaux ainsi alimentés, soit l'obtention de foies stéatosés ne présentant pas de qualités organoleptiques acceptables, entrainant ainsi une perte pécuniaire chez l'éleveur.

Il existe donc aujourd'hui un besoin pour un procédé d'obtention de foie gras (ou foie stéatosé) présentant des qualités organoleptiques acceptables, avec un bon rendement en poids de foie stéatosé par volaille, sans modification génétique de ladite volaille, sans entrainer sa mort prématurée et enfin qui serait économiquement acceptable pour l'éleveur.

De manière surprenante et inattendue, la Demanderesse a montré que l'injection de bactéries probiotioques en une seule dose intragastrique chez des volailles âgées de 2 à 14 jours entrainait une augmentation de leur taille et de leur poids, et plus particulièrement une augmentation du poids de leur foie plus importante que l'augmentation globale de ladite volaille.

En particulier, il est à noter que cette augmentation de la taille et du poids desdites volailles n'est pas liée à une augmentation significative de la quantité de nourriture ingérée, augmentant ainsi le rendement en poids de foie stéatosé par rapport à la quantité d'aliments fournie à l'animal.

Cette technique présente en outre l'avantage de ne pas générer une mort prématurée des volailles, les bactéries probiotiques utilisées s'étant avéré inoffensives pour ces animaux, et l'augmentation de la taille du foie n'étant pas liée à une dégénérescence tissulaire hépatique et n'ayant pas entrainé de dysfonctionnements hépatiques.

Enfin, la présente invention n'a pas de conséquences négatives sur la qualité organoleptique des foies stéatosés obtenus.

L'invention concerne un procédé d'obtention de volailles ayant un foie stéatosé, **caractérisé en ce qu**'il comprend les étapes suivantes :
a) administrer à ladite volaille au moins une dose de bactéries probiotiques, lesquelles bactéries probiotiques sont choisies dans le groupe comprenant *Lactobacillus fermentum* et *Lactobacillusspp. ;*
b) alimenter ladite volaille de sorte à obtenir un foie stéatosé.

Par « **foie stéatosé** », on entend un foie présentant une accumulation de triglycérides dans les hépatocytes, également appelé foie gras.

Par « **bactérie probiotique** », on entend une bactérie qui est susceptible de demeurer vivante dans la flore intestinale de l'animal auquel elle est administrée, et d'avoir un effet bénéfique sur la santé dudit animal.

Préférentiellement, le procédé selon l'invention est caractérisé en ce que l'administration de bactéries probiotiques à l'étape a) se fait par une injection intragastrique.

De manière préférée, l'injection intragastrique s'effectue à l'aide d'un cathéter stérile fixé sur une seringue hypodermique stérile. L'injection se fait au niveau du proventricule de l'animal.

Préférentiellement, le procédé selon l'invention est caractérisé en ce que l'administration de bactéries probiotiques à l'étape a) se fait par une injection intragastrique en une seule dose.

Préférentiellement, le procédé selon l'invention est caractérisé en ce que l'administration de bactéries probiotiques à l'étape a) se fait par une injection d'au moins 10⁶ UFC.

De manière préférée, l'administration de bactéries probiotiques à l'étape a) se fait par une injection de 10⁶ à 10⁹ UFC et, plus préférentiellement, de 10⁷ UFC.

De manière préférée, les bactéries probiotiques administrées sont choisies dans le groupe comprenant *Lactobacillus fermentum* (ci-après nommé LBF), en particulier ATCC 14931, et *Lactobacillus spp.,* plus spécifiquement *Lactobacillus spp.* Autruche 4 (ci-après nommé A4) dont l'identifiant taxonomique (Taxid) est 376425.

Dans le cadre de cette invention, les bactéries probiotiques sont suspendues dans un tampon. De manière préférée le tampon utilisé est du Tampon Phosphate Salin (PBS). Le pH du tampon utilisé est compris entre 6 et 8, et préférentiellement le pH est de 7.

De manière préférée, la dose de bactéries probiotiques selon la présente invention est suspendue dans un volume de tampon compris entre 0.1 et 5 mL, préférentiellement 0,5 et 3 mL, et encore plus préférentiellement de 1 mL.

Préférentiellement, le procédé selon l'invention est caractérisé en ce que ladite administration d'au moins une dose à l'étape a) se fait sur une volaille âgée de 2 jours à 14 jours, de préférence une volaille âgée de 7 jours.

Préférentiellement, le procédé selon l'invention est caractérisé en ce que la volaille est un canard ou une oie.

De manière préférée, la volaille utilisée dans le cadre de cette invention est un canard, de préférence un canard mulard.

Le canard mulard est issu du croisement entre un mâle de Barabarie (*Cairina* moscata) et une femelle commune généralement Pékin (*Anas plathyrynchos*). Il bénéficie d'un effet d'hétérosis pour la capacité d'ingestion et la production de foie gras puisqu'il présente une consommation alimentaire et un poids de foie gras supérieurs à la moyenne des espèces parentales. En outre, au cours de la période de suralimentation forcée, la capacité d'ingestion des canards mulards est la plus importante par rapport aux autres espèces. Enfin, le taux de fonte en pasteurisation ou stérilisation de son foie gras est faible (Guy et al, Ann. Zootech 44, 297-305, 1995).

Préférentiellement, le procédé selon l'invention est caractérisssé en ce que l'étape b) est une étape de suralimentation forcée.

Par **« suralimentation forcée »,** on entend le procédé selon lequel on force l'animal à ingurgiter des quantités de nourriture supérieures à ses besoins. Elle entraine au début un accroissement important des constituants actifs (protéines, acides nucléiques, phospholipides) associés à une lipogenèse intense. Les triglycérides néo-synthétisés incorporés dans les lipoprotéines, en particulier les VLDL (Very Low Density Lipoproteins) sont secrétés et transportés vers les tissus périphériques. Lorsque la capacité de lipogenèse induite par la suralimentation forcée dépasse la capacité de synthèse et de sécrétion des VLDL, les triglycérides néo-synthétisés s'accumulent dans les hépatocytes, provoquant une stéatose hépatique.

Cette étape de suralimentation forcée peut se faire avec un embuc. Cette étape consiste à déposer dans le jabot de la volaille un mélange d'aliment et d'eau. Le dépôt de ce mélange se fait par le biais d'un tube, appelée embuc, adapté à la physiologie de l'animal. Cette étape peut également être réalisé à l'aide d'une gaveuse mécanique. L'éleveur introduit alors une pompe hydraulique dans la bouche de l'animal et l'enfonce jusqu'à l'estomac pour contraindre l'animal à s'alimenter.

De manière préférée, si la volaille est un canard, l'étape de suralimentation dure entre 10 à 20 jours au moins 2 fois par jour, et préférentiellement 12 jours au moins 2 fois par jour.

De manière préférée, si la volaille est une oie, la suralimentation forcée se fait entre 15 à 25 jours au moins 3 fois par jour, et préférentiellement 20 jours au moins 3 fois par jour.

De manière préférée, la suralimentation forcée s'effectue sur des animaux âgés de 10 à 20 semaines, préférentiellement sur des animaux âgés de 11 à 16 semaines, et encore plus préférentiellement sur des animaux âgés de 14 semaines.

Préférentiellement, le procédé selon l'invention est **caractérisé en ce que** l'étape b) de suralimentation forcée se fait à l'aide de nutriments suffisamment riches en protéines et acides aminés pour conduire à l'obtention d'un foie stéatosé chez ladite volaille. Préférentiellement, le procédé selon l'invention est **caractérisé en ce que** l'étape b) de suralimentation forcée se fait à l'aide de produits à base d'amidon.

Préférentiellement, l'étape b) de suralimentation se fait avec du maïs, plus préférentiellement du maïs entier bouilli dans de l'eau salée.

Préférentiellement, la suralimentation forcée se fait à l'aide de maïs broyé. Le maïs est broyé jusqu'à l'obtention de grains très fins puis il est mélangé à de l'eau pour constituer une bouillie ou pâtée, plus facilement assimilable.

Plus préférentiellement, l'étape b) de suralimentation forcée se fait avec des produits à base de maïs, auquel a été rajouté des produits riches en matière grasse et en vitamines.

Le maïs présente une composition adaptée à l'alimentation des volailles destinées à la production de foie gras. Il est notamment riche en amidon, source de glucide nécessaire à la lipogénèse.

Selon un autre aspect, le procédé selon l'invention est **caractérisé en ce qu**'il est destiné à l'obtention de foie gras et en ce qu'il comprend en outre les étapes suivantes :
c) abattage de ladite volaille ;
d) extraction du foie de ladite volaille.

De manière préférée, l'étape c) d'abattage de ladite volaille s'effectue sur des animaux âgés d'environ 4 mois par sectionnement de la veine jugulaire.

### Exemple

### Exemple 1 Augmentation de la taille des foies de volailles après injection d'une dose intragastrique de bactéries probiotiques

### Protocole expérimental

Dans cet exemple, on utilise 30 poules âgées de 7 jours et destinées à la consommation. Les animaux sont séparés en trois groupes de 10. Chaque poule est placée dans des cages identiques (0,11 m de long, 0.075m de large et 0,07 m de haut) ; le sol des cages est recouvert de copeaux de bois frais. Chaque cage est munie d'un bol en céramique susceptible de contenir la nourriture destinée aux animaux et un abreuvoir afin que les animaux aient un accès à volonté à la nourriture et à l'eau. On place chaque cage dans une salle à température ambiante moyenne d'environ 22°C et avec une humidité relative de 55%.

Au jour 1, on procède à l'injection, soit d'une simple dose de 10⁷ bactéries suspendues dans 1 mL de PBS dans les cas des deux groupes expérimentaux, soit de 1 mL de PBS seul dans le cas du groupe témoin.

On utilise un cathéter stérile Teflon® (Angiocath, Deseret Medical, Becton Dickinson, Sandy, Etats Unis) qui est fixé sur une seringue hypodermique de 10 ml dépourvue de trace de substances pyrogènes (BD Plastipak, Bacton Dickinson, Madrid, Espagne). On introduit la seringue dans la cavité orale de la poule jusqu'au proventricule.

Pour chacun des groupes, on utilise une seringue et un cathéter différent.

Après cette injection, les poules sont maintenues à l'état redressé afin de limiter les risques de reflux du fluide injecté.

Dans un des deux groupes expérimentaux, chaque poule subit une injection de *Lactobacillus fermentum* (LBF). Dans l'autre groupe expérimental, chaque poule subit une injection de *Lactobacillus spp (Autruche 4).*

La base de la nourriture ingérée par les poules se compose de blé, de maïs, de farine, de riz, de soja, d'haricot et d'huile de tournesol.

La composition nutritionnelle par kilo de nourriture ingérée par les animaux est la suivante :
➢ Protéines : 185 g
➢ Acide gras : 35 g
➢ Cellulose : 45 g
➢ Minéraux : 45 g
➢ Sulfate de cuivre : 5 mg
➢ Rétinol : 3 mg
➢ Cholecalciférol : 0,05 mg
➢ α-tocophérol : 13,4 mg
➢ Mélange d'anticoccidien et de diclazuril : 1 mg

On donne aux poules de la nourriture présentant les mêmes ratios nutritionnels tout le long de l'étude. Chaque poule reçoit 110, 130, 130 et 140 g de nourriture par jour durant respectivement la première, deuxième, troisième et quatrième semaine de l'étude.

La nourriture est distribuée en une seule fois chaque matin de l'étude. Préalablement, on calcule la consommation totale de nourriture durant les 24 heures précédentes et on détermine l'indice de consommation. Ces résultats sont répertoriés dans le tableau 1 ci-dessous :

**Tableau 1 : Effet du traitement par bactéries probiotiques sur la prise alimentaire totale, l'augmentation de la masse corporelle totale et l'indice de consommation au jour 29.**

| Groupe expérimental | Prise alimentaire totale | Augmentation de la masse corporelle totale | Indice de consommation |
|---|---|---|---|
| Groupe traité au LBF (n=10) | 36647 | 9666 | 3.6 |
| Groupe traité à A4 (n=10) | 33249 | 8119 | 4.1 |
| Groupe témoin (n=10) | 30831 | 6036 | 5.1 |

| | | | |
|---|---|---|---|
| NS= Non significatif LBF= Lactobacillus fermentum A4+ Lactobacillus spp (Autruche 4) | | | |

L'indice de consommation correspond au rapport entre la prise alimentaire (consommation totale) et la prise de poids (augmentation de la masse totale))

En outre, on détermine la masse corporelle des animaux. Ces résultats sont répertoriés dans le tableau 2 ci-dessous :

**Tableau 2 : Evolution de la masse corporelle en fonction du temps chez les poules ayant subit une injection de bactéries probiotiques**

| Jour | Groupe traité au LBF (n=10) | P-value | Groupe traité à A4 (n=10) | P-value | Groupe témoin (n=10) | P-value |
|---|---|---|---|---|---|---|
| Jour 1 | 122±13 | NS | 111±15 | NS | 117±7 | NS |
| Jour 8 | 386±50 | <0.002 | 235±34 | NS | 223±15 | <0.002 |
| Jour 15 | 646±66 | <0.004 | 449±75 | NS | 481±44 | <0.004 |
| Jour 22 | 754±70 | <0.004 | 650±87 | 0.02 | 576±45 | <0.004 |
| Jour 29 | 1088±15 | 0.002 | 923±100 | <0.001 | 720±19 | <0.001 |

| | | | | | | |
|---|---|---|---|---|---|---|
| NS= Non significatif LBF= Lactobacillus fermentum A4= Lactobacillus spp (Autruche 4) | | | | | | |

L'étude se termine au jour 29 par le sacrifice des animaux par sectionnement de la veine jugulaire.

### Résultats

En comparaison avec le groupe témoin, la moyenne de masse corporelle est supérieure dans les deux groupes expérimentaux (Tableau 1). Chacun de ces deux groupes présente un meilleur indice de consommation que le groupe témoin. Par exemple, l'indice de consommation observé chez les poules ayant subit une injection de LBF est augmenté de 42% par rapport aux poules du groupe témoin.

Dans cette étude, la réponse au traitement par bactéries probiotiques est évidente dans les groupes traités par LBF et A4 au jour 8 et au jour 21 (Tableau 2). Plus spécifiquement, la masse corporelle des poules traitées par LBF est significativement supérieure à celles des poules traitées par A4.

De plus, la réponse au traitement par bactéries probiotiques est plus rapide dans le groupe traité par LBF. En effet, les résultats obtenus suggèrent que les poules traitées au LBF ont un taux de conversion de la nourriture en masse corporelle plus élevé que les poules traitées à A4.

Au jour 29, le poids absolu des poules traitées au LBF (moyenne ± écart type de 42,6 ± 1,8) et des poules traitées à A4 (moyenne ± écart type de 38,0 ± 3,4) est significativement supérieur au poids absolu des poules du groupe témoin (moyenne ± écart type de 15,4 ± 1.2 ; P < 0,02).

Le poids relatif du foie, défini en terme de masse corporelle, dans le cas des poules traitées par LBF (3,9%) et A4 (4,0%) est supérieur à la valeur considérée comme normale (2 à 3%) chez les poules adultes (Williams, Avian pathology ; 34(1), 29-47, February 2005).

### Conclusion

L'administration intragastrique d'une simple dose de bactéries probiotiques n'a pas eu d'effets négatifs sur la santé des animaux traités. Aucun animal n'a montré des signes de détresse. L'examen macroscopique des organes internes lors de la biopsie et l'examen histologique du tissu hépatique n'ont pas mis en lumière d'anomalies du tissu hépatique.

En conclusion, l'administration intragastrique en une simple dose chez des poules de *Lactobacillus fermentum* ou de *Lactobacillus spp* (Autruche 4) a entrainé l'augmentation de leur masse corporelle et de leur indice de consommation, et surtout une augmentation de la taille et du poids du foie supérieure à l'augmentation globale de la poule.

### Exemple 2 : Production de foie gras chez des canards selon le procédé selon l'invention

Dans cet exemple, on utilise 30 canards âgés de 10 semaines. Les animaux sont séparés en trois groupes de 10. Chaque canard est placé dans des cages identiques ; le sol des cages est recouvert de copeaux de bois frais. Chaque cage est munie d'un bol en céramique susceptible de contenir la nourriture destinée aux animaux et un abreuvoir afin que les animaux aient un accès à volonté à la nourriture et à l'eau. On place chaque cage dans une salle à température ambiante moyenne d'environ 22°C et avec une humidité relative de 55%.

Au jour 1, on procède à l'injection, soit d'une simple dose de 10⁷ bactéries suspendues dans 1 mL de PBS dans les cas des deux groupes expérimentaux, soit de 1 mL de PBS seul dans le cas du groupe témoin.

On utilise un cathéter stérile Teflon® (Angiocath, Deseret Medical, Becton Dickinson, Sandy, Etats Unis) qui est fixé sur une seringue hypodermique de 10 ml dépourvue de trace de substances pyrogènes (BD Plastipak, Bacton Dickinson, Madrid, Espagne). On introduit la seringue dans la cavité orale de la poule jusqu'au proventricule.

Pour chacun des groupes, on utilise une seringue et un cathéter différent.

Après l'administration, les canards sont maintenus à l'état redressé afin de limiter les risques de reflux du fluide injecté.

Dans un des deux groupes expérimentaux, chaque canard subit une injection de *Lactobacillus fermentum* (LBF). Dans l'autre groupe expérimental, chaque canard subit une injection de *Lactobacillus spp (Autruche* 4).

Les canards sont ensuite élevés pendant une période de 13 semaines. Cette étape d'élevage est constitué de 3 phases : le démarrage, la croissance, la préparation à la suralimentation forcée.

La phase dite de « démarrage » dure 3 semaines. L'alimentation des canards est alors libre. Ils se nourrissent de 30 à 100 grammes par jour d'aliments composés de céréales à 75% sous forme de miettes et de granulés.

La phase dite de « croissance » dure 5 semaines. Pendant cette période, leur alimentation est libre mais limitée dans le temps, on parle alors de rationnement. La base de leur alimentation reste des céréales à 75% sous forme de granulé ou de farine. La dose journalière est d'environ 100 à 180 g.

La phase de « préparation au gavage » dure 5 semaines. Pendant cette période, leur alimentation est libre mais limitée dans le temps. La base de leur alimentation reste des céréales à 75% sous forme de granulés ou de farine. La dose journalière est progressivement augmentée, augmentant de 15 g par semaine et atteint environ 250 g au bout de 5 semaines.

L'étape de suralimentation forcée commence lors que les canards ont atteint l'âge de 13 semaines. Cette étape dure 12 jours, à raison de 2 repas par jour, ce repas étant à base de maïs bouilli dans l'eau salé. On nourrit les canards pendant 10 jours avec des rations alimentaires croissantes que l'on augmente selon les capacités de l'animal. Ainsi, pour les canards de l'exemple, on augmente la ration alimentaire de 10 g à chaque repas. Puis, les 2 derniers jours on distribue une dose de 500 g par jour.

A l'issu de cette étape de suralimentation forcée, on sacrifie le canard en lui sectionnant la veine jugulaire, on l'éviscère et on extrait le foie.

On constate que les foies extraits de canards ayant subit une injection de bactéries probiotiques préalablement à l'étape d'élevage (phase de démarrage, de croissance et de préparation à la suralimentation forcée) et à l'étape de suralimentation forcée, sont des foies stéatosés de taille et de poids supérieurs à ceux extraits de canards du groupe témoin, n'ayant pas subi d'injection de bactéries probiotiques. En outre, on constate que les foies stéatosés ainsi obtenus présentent une qualité organoleptique acceptable.

### Exemple 3 : Production de foie gras chez des oies selon le procédé selon l'invention

Dans cet exemple, on utilise 30 oies âgées de 7 jours. Les animaux sont séparés en trois groupes de 10. Chaque groupe est placé dans des cages identiques de taille adaptée ; le sol des cages est recouvert de copeaux de bois frais. Chaque cage est munie d'un bol en céramique susceptible de contenir la nourriture destinée aux animaux et un abreuvoir afin que les animaux aient un accès à volonté à la nourriture et à l'eau. On place chaque cage dans une salle à température ambiante moyenne d'environ 22°C et avec une humidité relative de 55%.

Au jour 1, on procède à l'injection, soit d'une simple dose de 10⁷ bactéries suspendues dans 1 mL de PBS dans les cas des deux groupes expérimentaux, soit de 1 mL de PBS seul dans le cas du groupe témoin.

On utilise un cathéter stérile Teflon® (Angiocath, Deseret Médical, Becton Dickinson, Sandy, Etats Unis) qui est fixé sur une seringue hypodermique de 10 ml dépourvue de trace de substances pyrogènes (BD Plastipak, Bacton Dickinson, Madrid, Espagne). On introduit la seringue dans la cavité orale de la poule jusqu'au proventricule.

Pour chacun des groupes, on utilise une seringue et un cathéter différent.

Après l'administration, les oies sont maintenues à l'état redressé afin de limiter les risques de reflux du fluide injecté.

Dans un des deux groupes expérimentaux, chaque oie subit une injection de *Lactobacillus fermentum* (LBF). Dans l'autre groupe expérimental, chaque oie subit une injection de *Lactobacillus spp (Autruche 4).*

Les oies sont ensuite élevées pendant une période de 14 semaines. Cette étape d'élevage est constitué de 3 phases : le démarrage, la croissance, la préparation à la suralimentation forcée.

La phase dite de « démarrage » dure 4 semaines. L'alimentation des oies est alors libre. Elles se nourrissent de 40 à 130 grammes par jour d'aliment composé de céréales à 75% sous forme de miettes et de granulés.

La phase dite de « croissance » dure 5 semaines. Pendant cette période, l'alimentation des oies est libre mais limitée dans le temps, on parle alors de rationnement. La base de leur alimentation reste des céréales à 75% sous forme de granulé ou de farine. La dose journalière est d'environ 200g.

La phase de préparation au gavage dure 5 semaines. Pendant cette période, leur alimentation est libre mais limitée dans le temps. La base de leur alimentation reste des céréales à 75% sous forme de granulés ou de farine. La dose journalière est progressivement augmentée, à base de 20 grammes par semaine et atteint environ 300g au bout de 5 semaines.

L'étape de suralimentation forcée commence lorsque les oies ont atteint l'âge de 14 semaines. Cette étape dure 18 jours, à raison de 3 repas par jour, ce repas étant à base de maïs bouilli dans l'eau salé. On nourrit les oies pendant 13 jours avec des rations alimentaires croissantes que l'on augmente selon les capacités de l'animal. Ainsi, pour les oies de l'exemple, on augmente la ration alimentaire de 10 g à chaque repas, soit de 30 g par jour. Puis, les 5 derniers jours, on distribue une dose de 700 g par jour.

A l'issu de cette étape de suralimentation alimentaire, on sacrifie l'oie en lui sectionnant la veine jugulaire, on l'éviscère et on extrait le foie.

On constate que les foies extraits d'oies ayant subit une injection de bactéries probiotiques, préalablement à l'étape d'élevage (phase de démarrage, de croissance et de préparation à la suralimentation forcée) et à l'étape de suralimentation forcée sont des foies stéatosés de taille et de poids supérieurs aux foies extraits d'oies du groupe témoin, n'ayant pas subi d'injection de bactéries probiotiques. Les foies stéatosés ainsi obtenus présentent une qualité organoleptique acceptable.

## Revendications

1. Procédé d'obtention de volailles ayant un foie stéatosé, **caractérisé en ce qu'**il comprend les étapes suivantes :
a) administration à ladite volaille d'au moins une dose de bactéries probiotiques, lesquelles bactéries probiotiques sont choisies dans le groupe comprenant *Lactobacillus fermentum* et *Lactobacillus spp. ;*
b) suralimentation forcée de ladite volaille de sorte à obtenir un foie stéatosé.

2. Procédé selon la revendication 1, **caractérisé en ce que** l'administration de bactéries probiotiques à l'étape a) se fait par une injection intragastrique.

3. Procédé selon l'une quelconque des revendications 1 ou 2, **caractérisé en ce que** l'administration de bactéries probiotiques à l'étape a) se fait par une injection intragastrique en une seule dose.

4. Procédé selon l'une quelconque des revendications 1 à 3, **caractérisé en ce que** l'administration de bactéries probiotiques à l'étape a) se fait par une injection d'au moins 10⁶ UFC.

5. Procédé selon l'une quelconque des revendications 1 à 4, **caractérisé en ce que** ladite administration d'au moins une dose à l'étape a) se fait sur une volaille âgée de 2 jours à 14 jours, de préférence une volaille âgée de 7 jours.

6. Procédé selon l'une quelconque des revendications 1 à 5, **caractérisé en ce que** la volaille est un canard ou une oie.

7. Procédé selon la revendication 6, **caractérisé en ce que** l'étape b) de suralimentation forcée se fait entre 10 et 20 jours au moins deux fois par jour si ladite volaille est un canard et entre 15 et 25 jours au moins 3 fois par jour si la volaille est une oie.

8. Procédé selon la revendication 7, caractérisé en ce l'étape b) de suralimentation forcée se fait à l'aide de nutriments suffisamment riches en protéines et acides aminés pour conduire à l'obtention d'un foie stéatosé chez ladite volaille.

9. Procédé selon les revendications 7 ou 8, **caractérisé en ce que** l'étape b) de suralimentation forcée se fait à l'aide de produits à base d'amidon.

10. Procédé selon l'une quelconque des revendications 1 à 9, **caractérisée en ce qu'**il est destiné à l'obtention de foie gras et **en ce qu'**il comprend en outre les étapes suivantes :
c) abattage de ladite volaille ;
d) extraction du foie de ladite volaille.
